# NEUE EUROPÄISCHE PATENTSCHRIFT

(11) **EP 1 795 427 B2**
(45) Veröffentlichungstag und Bekanntmachung des Hinweises auf die Entscheidung über den Einspruch: **24.09.2014**
(45) Hinweis auf die Patenterteilung: 26.11.2008
(21) Anmeldenummer: 05027070.1
(22) Anmeldetag: 12.12.2005
(51) Int. Cl.: B62D 1/19, B60R 21/05

(54) **Energie absorbierendes Element**
Energy absorbing element
Elément absorbeur d'énergie

(43) Veröffentlichungstag der Anmeldung: 13.06.2007
(73) Patentinhaber: Inventus Engineering GmbH, 6771 St. Anton/Montafon (AT)
(72) Erfinder: Battlogg, Stefan, 6771 St. Anton/Montafon (AT); Pösel, Jürgen, 6700 Bludenz (AT)
(74) Vertreter: Schütte, Hartmut

(56) Entgegenhaltungen:
- EP-A- 1 176 049
- DE-A1-102004 009 726
- DE-T2- 69 313 273
- DE-T2- 69 619 538
- JP-A- S5 112 532
- JP-U- H0 251 175
- JP-Y1- S4 818 743
- JP-Y1- S4 828 487
- US-A- 4 255 986
- US-B1- 6 203 105
- US-B1- 6 514 001

## Beschreibung

Die Erfindung betrifft ein Energie absorbierendes Element, insbesondere als Teil einer Vorrichtung für den einmaligen Insassenschutz in Fahrzeugen, mit einem fließfähigen Medium, das bei einem Aufprall durch mindestens eine Öffnung aus dem Element gedrückt wird. Eine derartige Vorrichtung ist aus der DE 10 2004 009 726 A1 bekannt.

Eine Vorrichtung, eingebaut in eine Lenksäule eins Kraftfahrzeuges, ist beispielsweise aus der US 5,870,930 bekannt. Die Lenksäule weist teleskopisch ineinander schiebbare Teile auf, wobei ein Teil mit einem ringförmigen Behälter versehen ist, in den eine geeignete Flüssigkeit, beispielsweise ein fließfähiges Silikon, eingefüllt ist. Am zweiten Teil ist eine Manschette fixiert, die nach Art eines Kolbens in den Behälter eintaucht und die Flüssigkeit bei einem Aufprall durch einen Kranz von kleinen Öffnungen auspresst. Die Öffnungen sind von einem ringförmigen Berstelement überdeckt. Die Öffnungen erzeugen eine Gegenkraft, wodurch ein Teil der Aufprallenergie absorbiert wird.

Aufprallenergie absorbierende Vorrichtungen sind in Fahrzeugen nicht nur an der Lenksäule, sondern auch an einer Reihe von anderen Bauteilen von Vorteil bzw. notwendig, beispielsweise an Kopfstützen, Sicherheitsgurten, Sitzen und Sitzelementen, usw. Im Extremfall lassen sich in einem Kraftfahrzeug mehr als 20 unterschiedliche Einbauorte finden. Ein wesentliches Problem dieser Vorrichtung liegt darin, dass sie nur für einen einmaligen Gebrauch in einem Notfall vorgesehen sind und in den meisten Fällen überhaupt nicht zum Einsatz kommen. Dennoch sollten sie zumindest über 10 Jahre funktionsfähig bleiben, ohne dass die Funktionsfähigkeit je überprüft werden kann.

In den letzten Jahren sind stoßdämpfende Elemente mit geschlossenen Kolben-Zylinder-Systemen vermehrt in Verwendung, in denen eine unter dem Einfluss eines elektrischen oder magnetischen Feldes die Viskosität ändernde Flüssigkeit durch Überströmöffnungen im Kolben oder im Zylinder hin- und herströmen kann. Die Fließfähigkeit des Mediums kann durch Änderung des Feldes beeinflusst werden. Dies ist von großer Bedeutung, da die Energieabsorption an unterschiedliche Ausgangszustände und Bedingungen angepasst werden kann und keine mechanisch beweglichen Teile notwendig sind. Da weder Dichtungen ihre Dichteigenschaften noch bewegliche Teile ihre Gängigkeit schlagartig verlieren, sind Abnützungen an den geschlossenen Kolben-Zylinder-Systemen rechtzeitig erkennbar. Hierin unterscheiden sich Stoßdämpfer, die in ständigem Gebrauch sind, von Aufprall dämpfenden Vorrichtungen.

Die Erfindung hat es sich nun zur Aufgabe gestellt, die Funktionsfähigkeit eines Elementes der eingangs genannten Art zu optimieren und erreicht dies dadurch, dass das Medium in einer Kapsel eingeschlossen ist, die beim Aufprall platzt.

Somit wird in das Aufprallenergie absorbierende Element das Medium nicht einfach gefüllt, sondern es wird die gefüllte, gedichtete Kapsel eingesetzt. Das enthaltende Medium, dessen Haltbarkeit und Lagefähigkeit über den Einsatzzeitraum selbständig gegeben sein muss, unterliegt in der dicht verschlossenen Kapsel keinen äußeren Einflüssen, die die Eigenschaften verändern könnten.

Die oben angeführten elektro- oder magnetorheologischen Flüssigkeiten weisen diese Eigenschaften auf, und können daher in die Kapsel eingefüllt werden, die dann in das Aufprall absorbierende Element eingesetzt wird. Die Kapsel überdeckt auch die Austrittsöffnung, durch die das Medium bei einem Aufprall ausgedrückt wird, sodass eine Berstscheibe oder ein anderer Verschluss für die Öffnung unnötig ist.

Die Kapsel besteht insbesondere aus einem flexiblen Material, wie z.B. einem Folienbeutel od. dgl., etwa aus Aluminiumfolie, aus einem beschichteten Gewebe, aus Kevlar-, Glasfasern, etc.

Nachstehend wird nun die Erfindung anhand der Figuren der beiliegenden Zeichnungen näher beschrieben, ohne darauf beschränkt zu sein. Es zeigen:
- Fig.1: einen schematischen Ausschnitt aus einer Lenksäule mit einem Aufprallenergie absorbierenden Element,
- Fig. 2: einen Längsschnitt durch das Element,
- Fig. 3: eine schematische Schrägansicht einer in das Element einsetzbaren Kapsel, und
- Fig. 4: eine schematische Darstellung der erfindungsgemäßen Vorrichtung als Teil einer Kopfstütze mit einem Aufprallenergie absorbierenden Element.

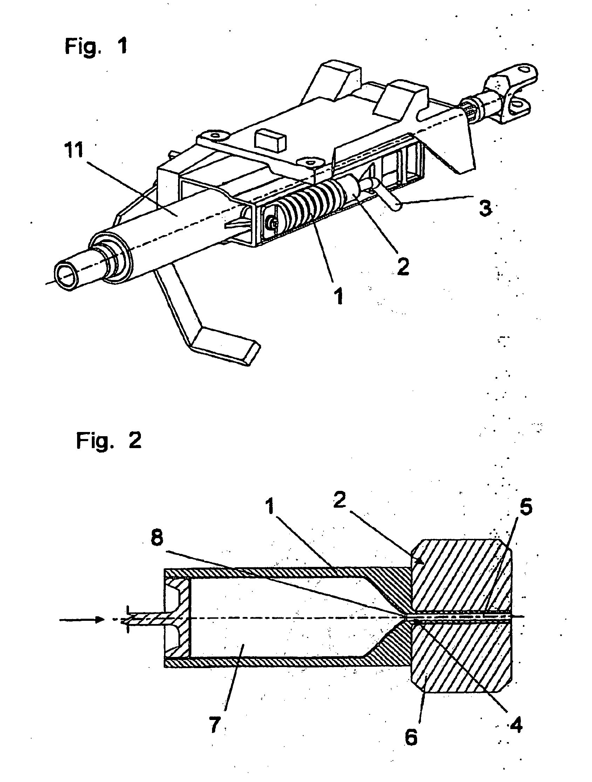

Eine Aufprallenergie absorbierende Vorrichtung kann, wie Fig. 1 zeigt, beispielsweise an einer Lenksäule 11 parallel zu deren bei einem Zusammenstoß längenverschiebbaren Teilen vorgesehen sein. Die Vorrichtung weist ein Element 1 auf, dessen Volumen verkleinerbar ist, und in das eine Flüssigkeit enthaltende Kapsel eingesetzt ist. Das Element 1 ist an einem Ende mit einem verschiebbaren Teil der Lenksäule 11 verbunden, während das andere Ende, an das eine Abflussleitung 3 anschließt, an einem nicht verschiebbaren Teil der Lenksäule 11 fixiert ist; Bei einem Aufprall kann sich die Lenksäule 11 verkürzen und die in der Kapsel enthaltene Flüssigkeit wird durch eine Öffnung und einen anschließenden Austrittskanal, in die Abflussleitung 3 ausgedrückt, wobei am Übergang in den Austrittskanal : 5 eine Gegenkraft erzeugt wird, die das Auspressen der Flüssigkeit verzögert, sodass Aufprallenergie absorbiert wird.

Das Element 1 ist mit einer magnetorheologischen Flüssigkeit gefüllt und der Austrittskanal 5 von einer Einrichtung 2 zur Erzeugung eines veränderbaren Magnetfeldes umgeben. Die Einrichtung 2 umfasst einen Elektromagneten, über den ein Magnetfeld erzeugt oder das Magnetfeld eines Permanentmagneten beeinflusst wird. Der Elektromagnet kann über Signale von Sensoren, die einen Aufprall überwachen, in Abhängigkeit von verschiedenen Kriterien, wie Gewicht und Sitzposition des Fahrers usw., angesteuert werden, wobei das veränderliche Magnetfeld die Viskosität der durch die Öffnung zu drückenden magnetorhealogischen Flüssigkeit verändert, und die Gegenkraft größer oder kleiner wird.

In Fig. 2 sind Details besser erkennbar. Das Element 1 verjüngt sich zu einer rechteckigen flachen Öffnung 4, an den der in die Abflussleitung 3 mündende Austrittskanal 5 anschließt. Der Austrittskanal 5 durchsetzt den Spalt 9 zwischen der Polfläche zweier Eisenelemente 6, denen eine nicht gezeigte Spule zugeordnet ist.

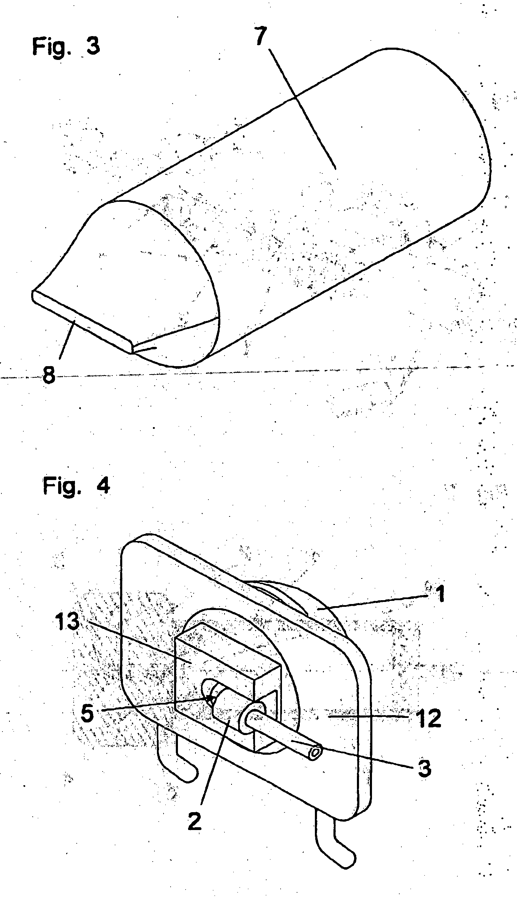

Fig. 1 und 2 zeigen zylindrische Elemente 1, wobei das Element gemäß Fig. 1 in Art eines Faltenbalges ausgebildet und komprimierbar ist, und gemäß Fig. 2 einen Kolben aufweist, um die Flüssigkeit auszudrücken, die in einer Kapsel 7 enthalten ist. Die Kapsel 7 ist zu einem Rand 8 hin abgeflacht und der Form des Aufnahmeraumes des Elementes 1 angepasst, wie aus Fig. 3 ersichtlich ist. Die Kapsel 7 wird daher so in das Element 1 eingesetzt, dass der abgeflachte Rand 8 die Öffnung 4 abdeckt (Fig. 2).

Die Kapsel 7 ist dicht verschlossen, und besteht aus einem Material, das mit dem Inhalt verträglich ist, um seine Eigenschaften über die Jahre nicht zu verändern. Sie kann beispielsweise durch einen Folienbeutel gebildet sein, der beispielsweise aus einem beschichteten Gewebe verklebt oder verschweißt ist. Die Kapsel 7 kann aber auch ein kompressibler Behälter od. dgl. von geringer Stabilität sein.

Wenn das Aufprallenergie absorbierende Element in eine Lenksäule 11 eingebaut ist, so wird bei einem Unfall durch den Aufprall des Oberkörpers auf das Lenkrad das Volumen des Elementes verringert, die Kapsel 7 platzt und die Einrichtung 2, regelt den Durchfluss der magnetorheologischen Flüssigkeit durch den Austrittskanal 5 durch eine entsprechende Änderung der Viskosität in Abhängigkeit von Signalen eines Rechners, der verschiedene Messdaten und Parameter verarbeitet. Bei Nichtgebrauch ist der Elektromagnet stromlos und das enthaltene Medium leichtflüssig. Der Elektromagnet wird daher nur im Unglücksfall erregt, um die Viskosität des magnetorheologischen Mediums zu erhöhen und zu verringern.

Bei der Verwendung magnetorheologischer Flüssigkeiten ist als Stromquelle ein beispielsweise im Lenkrad untergebrachter Kondensator ausreichend, sodass das System auch bei Ausfall der Stromversorgung des Kraftfahrzeuges funktionsfähig bleibt.

Fig. 4 zeigt schematisch eine aufpralldämpfende Kopfstütze 12. Der Element 1 ist hier nicht länglich zylindrisch, sondern eher in Form einer flacheren Dose, die ebenfalls zusammengedrückt werden kann, wenn der Kopf einer Person auf die Kopfstütze 12 schlägt. Die Kapsel ist in dieser Ausführung angepasst dosenartig ausgebildet. Der Austrittskanal 5 ist abgewinkelt und wiederum von der Einrichtung 2 umschlossen. 13 beziffert eine Elektronik, über die die Einrichtung angesteuert wird.

Die in der Kapsel 7 enthaltene magnetorhologische Flüssigkeit umfasst im Allgemeinen ein Gemenge aus einer Basisflüssigkeit, beispielsweise Silikonöl und Eisenpulverpartikeln. Um eine denkbare Entmischung aufgrund von unvermeidlichen Erschütterungen zu vermeiden, kann die Flüssigkeit Kugeln, Drallkörper od. dgl. zum Mischen und Durchwirbeln enthalten. Alternativ ist auch die Anordnung einer offenzelligen Schaumeinlage in der Kapsel 7 möglich, deren Zellen das Medium aufnimmt, um das Entmischen zu vermeiden.

## Patentansprüche

1. Energie absorbierendes Element (1), dessen Volumen verkleinerbar ist, und eine magnetorheologische Flüssigkeit enthält, die bei einem Aufprall aus dem Element (1) durch mindestens eine Öffnung (4) in einen anschließenden Austrittskanal (5) gedrückt wird, der von einer Einrichtung (2) zur Erzeugung eines veränderbaren Magnetfeldes umgeben ist, wobei die Viskosität der magnetorheologischen Flüssigkeit unter dem Einfluss des Magnetfeldes geändert werden kann, sodass eine Gegenkraft, die am Übergang in den Austrittskanal (5) das Auspressen der magnetorheologischen Flüssigkeit verzögert, größer oder kleiner wird, **dadurch gekennzeichnet, dass** sich das Element (1) zu einer rechteckigen flachen Öffnung (4) verjüngt, an den der sich in die Abflussleitung (3) mündende Austrittskanal (5) anschließt, und dass die magnetorheologische Flüssigkeit in einer in das Element (1) eingesetzten Kapsel (7) eingeschlossen ist, und dass die Kapsel (7) zu einem Rand (8) hin abgeflacht und der Form des Aufnahmeraumes des Elementes (1) angepasst ist, und dass der abgeflachte Rand (8) die Öffnung mit dem sich anschließenden Austrittskanal (5) abdeckt, und dass die Kapsel (7) beim Aufprall platzt, und dass das Element (1) einen Kolben aufweist, um die magnetorheologische Flüssigkeit auszudrücken, die in der Kapsel (7) ist.

2. Element nach Anspruch 1, **dadurch gekennzeichnet, dass** die Kapsel (7) aus einem flexiblen Material besteht.

3. Element nach Anspruch 1, **dadurch gekennzeichnet, dass** die Kapsel (7) ein Folienbeutel ist.

4. Element nach Anspruch 1, **dadurch gekennzeichnet, dass** die magnetorheologische Flüssigkeit ein Gemenge aus einer Basisflüssigkeit und Eisenpartikelpulver umfasst und Kugeln, Drallkörper oder dergleichen enthält, um ein Entmischen zu vermeiden.

5. Element nach Anspruch 1, **dadurch gekennzeichnet, dass** die magnetorheologische Flüssigkeit ein Gemenge aus einer Basisflüssigkeit und Eisenpartikelpulver umfasst, und in der Kapsel (7) in den Zellen einer offenzelligen Schaumeinlage angeordnet ist, um ein Entmischen zu vermeiden.

## Claims

1. An energy absorbing element (1) reducible in volume and containing a magneto-rheological liquid which in the case of impact is pressed out of the element (1) through at least one opening (4) into a following outlet port (5) which is surrounded by a device (2) for generating a changeable magnetic field, wherein the viscosity of the magneto-rheological liquid can be changed under the influence of the magnetic field so that a counteracting force delaying the forcing out of the magneto-rheological liquid at the transition into the outlet port (5) increases or decreases, **characterized in that** the element (1) tapers down to a rectangular, flat opening (4) which is followed by the outlet port (5) which opens into the drain line (3), and that the magneto-rheological liquid is entrapped in a capsule (7) inserted in the element (1), and that the capsule (7) is flattened toward an edge (8) and adapted to the shape of the receiving space of the element (1), and that the flattened edge (8) covers the opening and the following outlet port (5), and that the capsule (7) bursts on impact, and that the element (1) has a flask for pressing out the magneto-rheological liquid contained in the capsule (7).

2. The element according to claim 1, **characterized in that** the capsule (7) is made of a flexible material.

3. The element according to claim 1, **characterized in that** the capsule (7) is a plastic film pouch.

4. The element according to claim 1, **characterized in that** the magneto-rheological liquid is a mixture of a base fluid and powdered iron particles containing balls, swirlers or the like to prevent segregation.

5. The element according to claim 1, **characterized in that** the magneto-rheological liquid comprises a mixture of a base fluid and powdered iron particles and which is disposed in the capsule (7) in the cells of an open-cell foam inlay to prevent segregation.

## Revendications

1. Elément absorbeur d'énergie (1) dont le volume peut être diminué et contient un liquide magnétorhéologique qui, en cas de collision, est poussé hors dudit élément (1) à travers au moins une ouverture (4) dans un canal de sortie (5) contigu qui est entouré d'un dispositif (2) de génération d'un champ magnétique modifiable, la viscosité du liquide magnétorhéologique pouvant être modifiée sous l'influence du champ magnétique de sorte qu'une force antagoniste qui, sur la transition audit canal de sortie (5), ralentit l'action de chasser le liquide magnétorhéologique, devienne plus importante ou plus faible, **caractérisé par le fait que** ledit élément (1) se rétrécit en une ouverture (4) plate rectangulaire à laquelle est contigu ledit canal de sortie (5) débouchant dans la conduite d'écoulement (3), et que le liquide magnétorhéologique est renfermé dans une capsule (7) insérée dans ledit élément (1), et que ladite capsule (7) est aplatie vers un bord (8) et est adaptée à la forme de l'espace de réception dudit élément (1), et que le bord aplati (8) couvre l'ouverture avec le canal de sortie (5) contigu, et que ladite capsule (7) éclate lors de la collision et que ledit élément (1) présente un piston afin de chasser le liquide magnétorhéologique qui est présent dans ladite capsule (7).

2. Elément selon la revendication 1, **caractérisé par le fait que** ladite capsule (7) est réalisée dans une matière flexible.

3. Elément selon la revendication 1, **caractérisé par le fait que** ladite capsule (7) est un sachet en feuille.

4. Elément selon la revendication 1, **caractérisé par le fait que** le liquide magnétorhéologique comprend un mélange d'un liquide de base et de poudre de particules de fer et contient des billes, corps de tourbillonnement ou similaires afin d'éviter un démélange.

5. Elément selon la revendication 1, **caractérisé par le fait que** le liquide magnétorhéologique comprend un mélange d'un liquide de base et de poudre de particules de fer et est disposé à l'intérieur de ladite capsule (7) dans les cellules d'un insert de mousse à cellules ouvertes afin d'éviter un démélange.
